# EUROPÄISCHE PATENTANMELDUNG

(11) **EP 4 818 561 A1**
(43) Veröffentlichungstag der Anmeldung: **07.10.2026**
(21) Anmeldenummer: 25168593.9
(22) Anmeldetag: 04.04.2025
(51) Int. Cl.: F16K 31/53, F16K 31/524, F16K 31/60

(54) **DREHRINGBETÄTIGUNGSVORRICHTUNG UND SANITÄRVENTIL**

(71) Anmelder: Hansgrohe SE, 77761 Schiltach (DE)
(72) Erfinder: Hahn, Arno, 77761 Schiltach (DE); Meier, Fridolin, 77709 Oberwolfach (DE)
(74) Vertreter: Patentanwälte Ruff, Wilhelm, Beier, Dauster & Partner mbB

(57) **Zusammenfassung**

1. Drehringbetätigungsvorrichtung und Sanitärventil.

2.1. Die Erfindung bezieht sich auf eine Drehringbetätigungsvorrichtung mit einem Basiskörper (1), einer bedienseitigen Drehringeinheit (2), die gegenüber dem Basiskörper drehbeweglich angeordnet ist und einen nutzerbedienbaren Griffringteil (2a) und einen hülsen- oder ringförmigen Drehkoppelteil (2b) aufweist, einer betätigungsseitigen Drehfunktionseinheit (3) mit einem gegenüber dem Basiskörper drehbeweglich angeordneten Drehfunktionsglied (3a) und einer mechanischen Drehkopplung (4) zwischen der Drehringeinheit und der Drehfunktionseinheit mit einer bedienseitigen Drehkoppelstruktur (4a) am Drehkoppelteil und mit einer mit der bedienseitigen Drehkoppelstruktur zusammenwirkenden, betätigungsseitigen Drehkoppelstruktur (4b) am Drehfunktionsglied sowie auf ein damit ausgerüstetes Sanitärventil .

2.2. Die erfindungsgemäße Drehringbetätigungsvorrichtung umfasst eine Abdeckblendeneinheit (5), die einen gegenüber dem Griffringteil eigenständigen und von diesem umgebenen Abdeckkappenteil (5a) aufweist und gegenüber dem Basiskörper drehstellungsfest angeordnet ist, und eine Drehstellungshaltekopplung (6), die dafür eingerichtet ist, bei Verdrehung der Drehringeinheit gegenüber dem Basiskörper die Abdeckblendeneinheit in ihrer Drehstellung gegenüber dem Basiskörper konstant zu halten.

2.3. Verwendung z.B. in der Sanitärtechnik.

## Beschreibung

Die Erfindung bezieht sich auf eine Drehringbetätigungsvorrichtung nach dem Oberbegriff des Anspruchs 1 und auf ein damit ausgerüstetes Sanitärventil.

Demgemäß umfassen gattungsgemäße Drehringbetätigungsvorrichtungen einen Basiskörper, eine bedienseitige Drehringeinheit, eine betätigungsseitige Drehfunktionseinheit mit einem gegenüber dem Basiskörper drehbeweglich angeordneten Drehfunktionsglied und eine mechanische Drehkopplung zwischen der Drehringeinheit und der Drehfunktionseinheit. Die Drehringeinheit ist gegenüber dem Basiskörper drehbeweglich angeordnet und weist einen nutzerbedienbaren Griffringteil und einen hülsen- oder ringförmigen Drehkoppelteil auf. Die mechanische Drehkopplung beinhaltet eine bedienseitige Drehkoppelstruktur am Drehkoppelteil und eine mit der bedienseitigen Drehkoppelstruktur zusammenwirkende betätigungsseitige Drehkoppelstruktur am Drehfunktionsglied.

Bei dieser Drehringbetätigungsvorrichtung kann die Drehringeinheit an ihrem Griffringteil vom Benutzer bedient, d.h. gegriffen und relativ zum Basiskörper gedreht werden. Der Griffringteil fungiert folglich als Benutzerschnittstelle der Drehringbetätigungsvorrichtung für die Drehbetätigung durch den Benutzer. Die Drehringeinheit ist entsprechend bedienseitig angeordnet, d.h. an einer dem Benutzer zugänglichen bzw. zugewandten Stelle der Drehringbetätigungsvorrichtung. Die Drehbewegung der Drehringeinheit wird über die mechanische Drehkopplung auf das ebenfalls gegenüber dem Basiskörper drehbeweglich angeordnete Drehfunktionsglied der Drehfunktionseinheit übertragen, die sich auf einer Betätigungsseite der Drehringbetätigungsvorrichtung befindet, d.h. einem Betätigungsmittel zugewandt, das der Ausübung einer Nutzfunktion in einer vom Benutzer durch die Drehbewegung steuerbaren Weise dient. Mit dem in Bezug auf die Bediendrehbewegung stationär bleibenden Basiskörper kann die Drehringbetätigungsvorrichtung an einer jeweils gewünschten Einsatzstelle angeordnet bzw. angebracht werden.

Derartige, gattungsgemäße und ähnliche Drehringbetätigungsvorrichtungen werden beispielsweise bei Sanitärventilen dazu verwendet, dem Benutzer durch die Bediendrehbewegung die Steuerung einer vom Ventil ausgeübten Funktion zu ermöglichen. Häufig besitzt dabei das Sanitärventil einen Kartuschenaufbau, wobei der Basiskörper der Drehringbetätigungsvorrichtung einen Bestandteil eines Kartuschenkörpers des Ventils bildet oder an diesem angebracht ist. So sind Drehringbetätigungsvorrichtungen dieser Art u.a. bei Thermostatventilen oder Mischventilen in Gebrauch, um dem Benutzer durch die Bediendrehbewegung eine Steuerung des Mischungsverhältnisses zweier dem Ventil zugeführter Fluide zu ermöglichen, wie Kaltwasser und Warmwasser.

Es ist darüber hinaus z.B. für solche Misch- oder Thermostatventile bekannt, die Drehringbetätigungsvorrichtung um eine bedienseitige Drucktasteneinheit zu erweitern, die gegenüber dem Basiskörper axialbeweglich angeordnet ist und es dem Benutzer ermöglicht, durch das transversal axial bewegte Bedienen der Drucktasteneinheit eine zweite Ventilfunktion zu steuern, beispielsweise eine Absperrfunktion, mit der eine Fluidzufuhr oder eine Mischfluidabgabe wahlweise gesperrt oder freigegeben werden kann.

Gattungsgemäße Drehringbetätigungsvorrichtungen und damit ausgerüstete Sanitärventile mit Kartuschenaufbau, insbesondere in Form von Misch- oder Thermostatventilen, sind beispielsweise in der Offenlegungsschrift EP 3 928 014 A1 und der Patentschrift EP 3 499 103 B1 offenbart. Die mechanische Drehkopplung ist bei diesen Ventilen in Kartuschenbauweise z.B. durch eine Zahnkranzkopplung mit kämmenden Zahnkränzen am Drehkoppelteil der bedienseitigen Drehringeinheit einerseits und an der betätigungsseitigen Drehfunktionseinheit andererseits ausgeführt.

Bei diesen und ähnlichen herkömmlichen Drehringbetätigungsvorrichtungen umgibt der Griffringteil der Drehfunktionseinheit typischerweise einen zentrischen Abdeckblendenbereich, der einteilig mit dem Griffringteil gebildet ist und auf dem üblicherweise ein oder mehrere Symbole für den Benutzer sichtbar aufgebracht sind, die beispielsweise zur Erkennung der momentanen Drehstellung und damit der momentanen Funktionsstellung z.B. des Thermostatventils dienen können. Für manche Anwendungen ist dieses synchrone Mitdrehen eines vom Griffringteil umgebenen, zentrischen Bereichs mit dem vom Benutzer gedrehten Griffringteil unerwünscht, beispielsweise in Fällen, bei denen dieser zentrische Abdeckblendenbereich als Nutzerschnittstelle einer zusätzlichen Drucktastenfunktion der Drehringbetätigungsvorrichtung fungiert.

Die Offenlegungsschrift EP 1 102 294 A1 offenbart eine Drehringbetätigungsvorrichtung mit zusätzlicher Drucktastenfunktion zur Verwendung in Bedieneinheiten von Kraftfahrzeugen, bei der ein hohler Drehknopf drehbeweglich an einer Unterlage, wie einer Kraftfahrzeug-Frontblende, gehalten ist und zentrisch im hohlen Drehknopf ein Drucktastenkörper angeordnet ist, der an der Unterlage axialbeweglich und drehfest gehalten sowie am Drehknopf axialbeweglich und drehbeweglich geführt ist, so dass er sich beim Verdrehen des Drehknopfs nicht mit diesem mitdreht. Der Drehknopf erstreckt sich betätigungsseitig axial über den Drucktastenkörper hinaus zu einer Platine, um dort durch die Drehbewegung ein elektrisches Kontaktelement zu betätigen. Mit dem Drucktastenkörper lässt sich ein anderes elektrisches Kontaktelement auf der Platine betätigen.

Der Erfindung liegt als technisches Problem die Bereitstellung einer Drehringbetätigungsvorrichtung der eingangs genannten Art, die gegenüber dem oben erwähnten Stand der Technik weitergehende Vorteile insbesondere im Hinblick auf Funktionalität, Bauraumbedarf und/oder Herstellungsaufwand bietet, sowie eines damit ausgerüsteten Sanitärventils zugrunde.

Die Erfindung löst dieses Problem durch die Bereitstellung einer Drehringbetätigungsvorrichtung mit den Merkmalen des Anspruchs 1 und eines Sanitärventils mit den Merkmalen des Anspruchs 11. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Die erfindungsgemäße Drehringbetätigungsvorrichtung beinhaltet eine Abdeckblendeneinheit, die einen gegenüber dem Griffringteil eigenständigen und von diesem umgebenen Abdeckkappenteil aufweist und gegenüber dem Basiskörper drehstellungsfest angeordnet ist, und eine Drehstellungshaltekopplung, die dafür eingerichtet ist, bei Verdrehung der Drehringeinheit gegenüber dem Basiskörper die Abdeckblendeneinheit in ihrer Drehstellung gegenüber dem Basiskörper konstant zu halten.

Durch diese erfindungsgemäßen Maßnahmen dreht sich die Abdeckblendeneinheit beim Drehen des Griffringteils durch den Benutzer nicht mit dem Griffringteil mit, sondern behält durch die Wirkung der Drehstellungshaltekopplung ihre Drehstellung, d.h. ihre Stellung in Bezug auf die Drehbewegung des Griffringteils, unverändert bei. Dementsprechend bleibt auch die Position von optional auf dem Abdeckkappenteil der Abdeckblendeneinheit angeordneten Symbolen, wie Bediensymbolen und/oder herstellerhinweisenden Symbolen etc., beim Drehen des Griffringteils durch den Benutzer unverändert. Die mechanische Drehkopplung zwischen der vom Benutzer bedienten Drehringeinheit und der betätigungsseitigen Drehfunktionseinheit bleibt unbeeinflusst von dieser bewegungstechnischen Entkopplung der Abdeckblendeneinheit bzw. des Abdeckkappenteils von der Drehringeinheit und speziell von dessen Griffringteil. Die Drehstellungshaltekopplung braucht keine starre mechanische Kopplung der Abdeckblendeneinheit am Basiskörper sein, sondern kann vorzugsweise so realisiert sein, dass es keiner solchen starren mechanischen Kopplung bedarf. Dies bietet funktionelle und konstruktive Vorteile beispielsweise in Bezug auf eine problemlose Bereitstellung auch größerer Dreheinstellwinkel bis hin zu einer freien Verdrehbarkeit des Griffringteils um 360° oder mehr. Dazu kann die Drehstellungshaltekopplung z.B. eine Getriebekopplung oder eine berührungslose Kopplung, wie eine Magnetkopplung, beinhalten, über die sich die Abdeckblendeneinheit axial am Basiskörper oder an der Drehringeinheit abstützt.

In einer Weiterbildung der Erfindung weist die Drehringbetätigungsvorrichtung eine bedienseitige Drucktasteneinheit, die gegenüber dem Basiskörper axialbeweglich angeordnet ist und die Abdeckblendeneinheit beinhaltet, und eine betätigungsseitige Translationsfunktionseinheit auf, die mit der Abdeckblendeneinheit translationsgekoppelt ist. Vorteilhaft beinhaltet die Drehringbetätigungsvorrichtung in dieser Ausführung neben ihrer Dreheinstellfunktion eine zusätzliche Drucktasteneinstellfunktion, wozu die Drucktasteneinheit als Benutzerschnittstelle dient, die hierzu von der Abdeckblendeneinheit Gebrauch macht. Mit anderen Worten kann die Abdeckblendeneinheit zur Bereitstellung der Drucktaste für die Drucktasteneinheit benutzt werden, insbesondere mit dem Abdecckappenteil als Benutzerschnittstelle, die der Benutzer zum Auslösen der Drucktasteneinstellfunktion bedienen, i.e. durch eine Bediendruckkraft axial bewegen, kann. Je nach Bedarf und Anwendungsfall kann vorgesehen sein, dass bei dieser Drucktastenfunktion auch die Drehringeinheit oder ein Teil derselben axialbeweglich oder alternativ axial unbewegt bleibend angeordnet ist.

Dies ermöglicht beispielsweise die Verwendung der Drehringbetätigungsvorrichtung für Ventile, die neben einer Dreheinstellfunktion zusätzlich eine Drucktasteneinstellfunktion besitzen, wie sanitäre Thermostatventile, bei denen durch die Drehbewegung ein Fluidmischungsverhältnis und durch die Drucktastenbewegung eine Absperrfunktion bereitgestellt wird. Die betätigungsseitige Translationsfunktionseinheit kann beispielsweise im Fall eines Sanitärventils mit Kartuschenaufbau einen axialbeweglichen Ventilstößel bzw. Ventilschließkörper beinhalten oder auf einen solchen einwirken. In alternativen Ausführungen kann die Drehringbetätigungsvorrichtung allein auf die Ausführung der Dreheinstellfunktion ausgelegt sein.

In einer Weiterbildung der Erfindung beinhaltet die Drehstellungshaltekopplung eine Zahnradgetriebekopplung, die eine erste Getriebezahnstruktur am Basiskörper, eine zweite Getriebezahnstruktur an der Drehringeinheit und eine dritte Getriebezahnstruktur an der Abdeckblendeneinheit umfasst. Dies stellt eine für viele Anwendungen vorteilhafte Realisierung der Drehstellungshaltekopplung unter Verwendung eines Zahnradgetriebes dar. Durch geeignete Ausführung des Zahnradgetriebes ist dieses in der Lage, die Abdeckblendeneinheit in der geforderten Weise mit konstant bleibender Drehstellung am Basiskörper zu halten, ohne dass es hierfür einer starren mechanischen Kopplung der Abdeckblendeneinheit am Basiskörper bedarf. Dazu kann es insbesondere als Getriebe mit 1:1-Übersetzung realisiert sein, das dafür sorgt, dass sich die Abdeckblendeneinheit relativ zur Drehringeinheit gegensinnig mit gleichem Drehwinkelbetrag dreht, so dass die Drehstellung der Abdeckblendeneinheit in Bezug auf den Basiskörper konstant bleibt, wenn der Benutzer die Drehringeinheit relativ zum Basiskörper verdreht.

In einer Ausgestaltung der Erfindung beinhalten die erste Getriebezahnstruktur eine erste Zahnkranzstruktur, die dritte Getriebezahnstruktur eine zweite Zahnkranzstruktur und die zweite Getriebezahnstruktur eine erste Zahnradanordnung, die mit der ersten und der zweiten Zahnkranzstruktur kämmt. Dies stellt eine funktionell und herstellungstechnisch vorteilhafte Realisierung der Zahnradgetriebekopplung dar, bei der die Drehringeinheit mit einer Zahnradanordnung versehen ist, die mit den Zahnkranzstrukturen am Basiskörper einerseits und an der Abdeckblendeneinheit andererseits dergestalt kämmt, dass sich die Drehringeinheit relativ zum Basiskörper und zur Abdeckblendeneinheit verdrehen lässt und hierbei die Abdeckblendeneinheit ihre Drehstellung relativ zum Basiskörper beibehält.

In einer weiteren Ausgestaltung der Erfindung sind die erste und die zweite Zahnkranzstruktur axial zueinander versetzt angeordnet. Die erste Zahnradanordnung umfasst mindestens ein erstes, mit der ersten Zahnkranzstruktur kämmendes Zahnrad und mindestens ein zweites Zahnrad, das mit der zweiten Zahnkranzstruktur und mit dem mindestens einen ersten Zahnrad kämmt. Diese spezifische Ausführung der Zahnradgetriebekopplung erweist sich funktionell und herstellungstechnisch für viele Anwendungen als vorteilhaft, insbesondere auch in Bezug auf die Erzielung einer kompakten Bauform. Die Ausführung der Zahnradanordnung mit den mindestens zwei kämmenden Zahnrädern ermöglicht die geforderte gegensinnige Drehbewegung der Abdeckblendeneinheit relativ zur Drehringeinheit.

In einer weiteren Ausgestaltung der Erfindung ist die Zahnradgetriebekopplung durch ein Kegelradgetriebe gebildet. Diese Ausführung der Zahnradgetriebekopplung eignet sich beispielsweise vorteilhaft für einen Einsatz der Drehringbetätigungsvorrichtung bei Sanitärventilen mit einem Kartuschenaufbau. Dabei kann die Zahnradanordnung des Kegelradgetriebes in Umfangsrichtung eines Kartuschenkörpers des Ventils umlaufen.

In einer anderen Ausgestaltung der Erfindung beinhalten die erste Getriebezahnstruktur eine dritte Zahnkranzstruktur, die zweite Getriebezahnstruktur eine vierte Zahnkranzstruktur und die dritte Getriebezahnstruktur eine zweite Zahnradanordnung, die mit der dritten und der vierten Zahnkranzstruktur kämmt. Dies stellt eine für entsprechende Anwendungen vorteilhafte, weitere Realisierungsmöglichkeit der Zahnradgetriebekopplung dar, wobei in diesem Fall die Zahnradanordnung an der Abdeckblendeneinheit angeordnet ist, während die Zahnkränze am Basiskörper bzw. der Drehringeinheit ausgebildet sind.

In einer weiteren Ausgestaltung der Erfindung sind die dritte und die vierte Zahnkranzstruktur radial zueinander versetzt angeordnet und die zweite Zahnradanordnung umfasst mindestens ein drittes Zahnrad, das mit der dritten und mit der vierten Zahnkranzstruktur kämmt. Dies stellt eine vorteilhafte spezielle Realisierung der alternativen Zahnradgetriebekopplung dar, die beispielsweise hinsichtlich Erzielung einer kompakten Bauform insbesondere in axialer Richtung Vorteile bietet.

In einer weiteren Ausgestaltung der Erfindung ist die Zahnradgetriebekopplung durch ein Planetengetriebe gebildet. Dies stellt eine funktionell und herstellungstechnisch für viele Fälle günstige Realisierung der Zahnradgetriebekopplung dar. Das Planetengetriebe lässt sich insbesondere mit relativ geringem axialem Bauraumbedarf ausführen.

In einer anderen Ausgestaltung der Erfindung beinhaltet die Drehstellungshaltekopplung eine Magnetkopplung, die eine erste Magnetanordnung am Basiskörper und eine mit dieser drehstellungsstabilisierend zusammenwirkende zweite Magnetanordnung an der Abdeckblendeneinheit umfasst, wobei die erste und die zweite Magnetanordnung unter Bildung eines zwischenliegenden Durchführungsspaltes für die Drehringeinheit axial voneinander beabstandet sind. Dies stellt eine für entsprechende Anwendungen vorteilhafte, weitere alternative Ausführung der Drehstellungshaltekopplung dar, durch die Zahnrad- und Zahnkranzstrukturen entfallen, und es ist wiederum keine starre mechanische Kopplung zwischen der Abdeckblendeneinheit und dem Basiskörper erforderlich, um die Abdeckblendeneinheit in ihrer Drehstellung relativ zum Basiskörper konstant zu halten. Dafür sorgt in diesem Fall die Magnetwirkung zwischen den beiden Magnetanordnungen am Basiskörper einerseits und an der Abdeckblendeneinheit andererseits. Gleichzeitig ermöglicht diese berührungsfreie Kopplung die Bildung des Durchführungsspalts, der dazu genutzt werden kann, eine entsprechende Komponente der Drehringeinheit durchzuführen, beispielsweise eine Durchführung in zur Axialrichtung senkrechter Radialrichtung, wenn sich die Magnetanordnungen axial beabstandet gegenüberliegen.

Das erfindungsgemäße Sanitärventil beinhaltet die erfindungsgemäße Drehringbetätigungsvorrichtung. Vorteilhaft lässt sich folglich das erfindungsgemäße Sanitärventil durch die erfindungsgemäße Drehringbetätigungsvorrichtung vom Benutzer zur Einstellung einer entsprechenden Ventilfunktion betätigen bzw. bedienen.

In einer Weiterbildung der Erfindung beinhaltet das Sanitärventil einen Ventilkartuschenkörper, der den Basiskörper der Drehringbetätigungsvorrichtung bereitstellt. Diese Maßnahme ist speziell für Ventile mit Kartuschenaufbau von Vorteil.

In einer Weiterbildung der Erfindung ist das Sanitärventil dafür eingerichtet, durch die Drehbewegung der Drehringeinheit eine Fluidmischfunktion oder eine Mengenregulierfunktion oder eine Verbraucherauswahlfunktion bereitzustellen. Die Mischfunktion lässt sich beispielsweise zur Bereitstellung eines Thermostatventils nutzen, mit dem Kaltwasser und Warmwasser gemischt werden. Die Mengenregulierfunktion lässt sich beispielsweise dazu nutzen, Wasser in einer einstellbaren Menge zur Verfügung zu stellen. Durch die Verbraucherauswahlfunktion kann Wasser wahlweise jeweils einem oder mehreren von einer Mehrzahl von Verbrauchern zugeführt werden, z.B. einem Wannenauslauf und/oder einer Handbrause.

In einer Weiterbildung der Erfindung ist das Sanitärventil dafür eingerichtet, durch die Axialbewegung der Drucktasteneinheit eine Fluidabsperrfunktion bereitzustellen. In dieser Ausführung lässt sich das Sanitärventil als Absperrventil bzw. als ein Ventil mit Fluidabsperrfunktion nutzen, zusätzlich zu der weiteren Ventilfunktion, die der Benutzer durch Drehen der Drehringeinheit steuern kann.

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine Explosionsansicht eines erfindungsgemäßen Sanitärventils in Kartuschenbauweise mit einer erfindungsgemäßen Drehringbetätigungsvorrichtung in einer Kegelradgetriebeausführung,
- Fig. 2: eine Seitenansicht des Sanitärventils von Fig. 1 schräg von oben ohne Griffringteil und Abdeckkappenteil,
- Fig. 3: eine Draufsicht auf das Sanitärventil von Fig. 1 ohne Abdeckblendeneinheit und mit teilweise herausgenommenen Kegelzahnrädern,
- Fig. 4: eine Längsschnittansicht des Sanitärventils von Fig. 1,
- Fig. 5: eine Seitenansicht schräg von oben einer Ventilvariante mit einer erfindungsgemäßen Drehringbetätigungsvorrichtung in einer Planetengetriebeausführung ohne Griffringteil und Abdeckkappenteil,
- Fig. 6: eine Längsschnittansicht der Ventilvariante von Fig. 5,
- Fig. 7: eine Seitenansicht schräg von oben einer Ventilvariante mit einer erfindungsgemäßen Drehringbetätigungsvorrichtung in einer Magnetkopplungsausführung ohne Griffringteil und Abdeckkappenteil und
- Fig. 8: eine Längsschnittansicht der Ventilvariante von Fig. 7.

Wie in den Figuren anhand exemplarischer Ausführungen veranschaulicht, umfasst die erfindungsgemäße Drehringbetätigungsvorrichtung einen Basiskörper 1, eine bedienseitige Drehringeinheit 2, eine betätigungsseitige Drehfunktionseinheit 3, eine mechanische Drehkopplung 4 zwischen der Drehringeinheit 2 und der Drehfunktionseinheit 3 sowie eine Abdeckblendeneinheit 5 und eine Drehstellungshaltekopplung 6. Die bedienseitige, d.h. einem Benutzer zwecks Bedienen der Vorrichtung zugewandte, Drehringeinheit 2 ist gegenüber dem Basiskörper 1 drehbeweglich angeordnet und beinhaltet einen nutzerbedienbaren Griffringteil 2a und einen hülsen- oder ringförmigen Drehkoppelteil 2b. Die betätigungsseitige, d.h. einer von der Vorrichtung zu betätigenden Einrichtung zugewandte, Drehfunktionseinheit 3 weist ein gegenüber dem Basiskörper 1 drehbeweglich angeordnetes Drehfunktionsglied 3a auf. Die mechanische Drehkopplung 4 umfasst bedienerseitig eine Drehkoppelstruktur 4a am Drehkoppelteil 2b und betätigungsseitig eine Drehkoppelstruktur 4b am Drehfunktionsglied 3a, die mit der bedienseitigen Drehkoppelstruktur 4a drehkoppelnd zusammenwirkt.

Die Abdeckblendeneinheit 5 weist einen gegenüber dem Griffringteil 2a eigenständigen und von diesem umgebenen Abdeckkappenteil 5a auf und ist gegenüber dem Basiskörper 1 drehstellungsfest angeordnet, d.h. die Abdeckblendeneinheit 5 verbleibt beim Verdrehen des Griffringteils 2a in einer konstanten Stellung gegenüber dem Basiskörper 1 bezogen auf die Drehung des Griffringteils 2a. Die Drehstellungshaltekopplung 6 ist dafür eingerichtet, bei Verdrehung der Drehringeinheit 2 gegenüber dem Basiskörper 1 die Abdeckblendeneinheit 5 in ihrer Drehstellung gegenüber dem Basiskörper 1 konstant zu halten.

In vorteilhaften Ausführungsformen umfasst die Drehringbetätigungsvorrichtung, wie in den gezeigten Beispielen, zur Bereitstellung einer entsprechenden, zusätzlichen Drucktastenfunktionalität bedienerseitig eine Drucktasteneinheit 7, die gegenüber dem Basiskörper 1 axialbeweglich angeordnet ist und die Abdeckblendeneinheit 5 beinhaltet, und betätigungsseitig eine Translationsfunktionseinheit 20, die mit der Abdeckblendeneinheit 5 translationsgekoppelt ist. Folglich führt die Translationsfunktionseinheit 20 eine translatorische Bewegung, i.e. eine Verschiebebewegung, aus, wenn der Benutzer bedienerseitig die Drucktasteneinheit 7 betätigt, indem er diese mittels einer Druckkraft axial gegenüber dem Basiskörper 1 bewegt. Bei dieser Ausführung der Vorrichtung mit der Drucktastenfunktionalität kann je nach Bedarf und Anwendungsfall auch die Drehringeinheit 2 oder ein Teil derselben axialbeweglich angeordnet oder alternativ axial unbewegt bleibend angeordnet sein.

Bei Verwendung der Drehringbetätigungsvorrichtung für ein Sanitärventil kann die Translationsfunktionseinheit beispielsweise einen axialbeweglichen Ventilkörper, wie einen Ventilstößel oder einen Ventilschließkörper, beinhalten oder auf einen solchen einwirken. Zusätzlich kann die Drehfunktionalität der Drehringbetätigungsvorrichtung dazu dienen, diesen Ventilkörper oder einen anderen Ventilkörper des Ventils in eine Drehbewegung zu versetzen und dadurch eine zugeordnete weitere Ventilfunktion zu steuern, beispielsweise eine Fluidmischfunktion zusätzlich zu einer Fluidabsperrfunktion. In alternativen Ausführungen besitzt die Drehringbetätigungsvorrichtung keine derartige Drucktastenfunktionalität, wobei durch ihre Drehfunktionalität vom Benutzer eine zugeordnete Nutzfunktion gesteuert werden kann, bei Verwendung an einem Ventil beispielsweise eine Fluidmischfunktion oder eine Fluidabsperrfunktion.

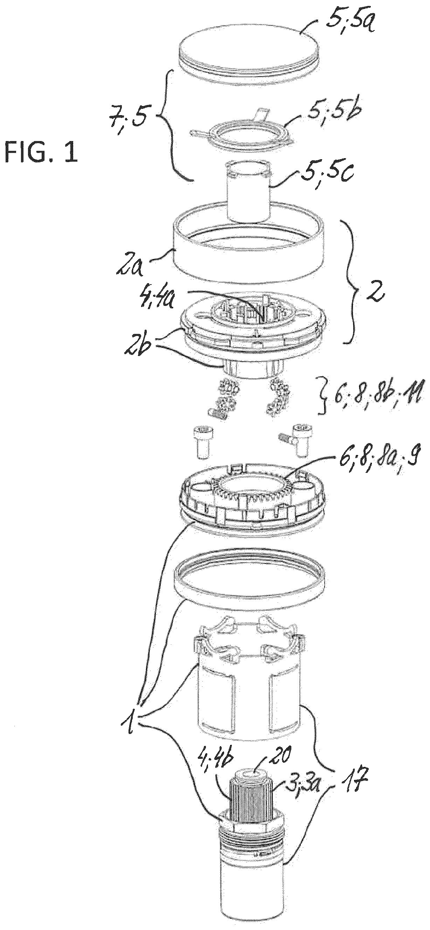

In entsprechenden Realisierungen beinhaltet die Drehstellungshaltekopplung 6 eine Zahnradgetriebekopplung 8 mit einer ersten Getriebezahnstruktur 8a am Basiskörper 1, einer zweiten Getriebezahnstruktur 8b an der Drehringeinheit 2 und einer dritten Getriebezahnstruktur 8c an der Abdeckblendeneinheit 5. Die Fig. 1 bis 6 zeigen zugehörige Ausführungsbeispiele.

Hierbei weist die Zahnradgetriebekopplung in entsprechenden Ausführungen, wie in den Beispielen der Fig. 1 bis 6, zwei Zahnkranzstrukturen und eine Zahnradanordnung als jeweilige Getriebezahnstruktur auf. Spezieller kann hierbei die erste Getriebezahnstruktur 8a eine erste Zahnkranzstruktur 9 beinhalten, die dritte Getriebezahnstruktur 8c eine zweite Zahnkranzstruktur 10 und die zweite Getriebezahnstruktur 8b eine erste Zahnradanordnung 11, die mit der ersten und der zweiten Zahnkranzstruktur 9, 10 kämmt. Die Fig. 1 bis 4 beziehen sich auf ein derartiges Ausführungsbeispiel. Dabei beinhaltet in diesem Ausführungsbeispiel die Abdeckblendeneinheit 5 ein Federringteil 5b, an dem sich der Abdeckkappenteil 5a abstützt und an dem unterseitig die zweite Zahnkranzstruktur 10 ausgebildet ist. Des Weiteren besitzt die Abdeckblendeneinheit 5 in dieser Ausführung ein hülsenförmiges Teil 5c, mit der die Hubbewegung der Drucktastenfunktion vom Abdeckkappenteil 5a zur betätigungsseitigen Translationsfunktionseinheit 20 weitergeleitet wird.

In vorteilhaften Ausführungen sind hierbei die erste und die zweite Zahnkranzstruktur 9, 10 axial zueinander versetzt angeordnet, und die erste Zahnradanordnung 11 umfasst mindestens ein erstes, mit der ersten Zahnkranzstruktur 9 kämmendes Zahnrad 11a und mindestens ein zweites Zahnrad 11b, das mit der zweiten Zahnkranzstruktur 11 und mit dem mindestens einen ersten Zahnrad 11a kämmt. Auch diese Merkmale sind beim Ausführungsbeispiel der Fig. 1 bis 4 verwirklicht.

In entsprechenden Realisierungen ist die Zahnradgetriebekopplung 8 speziell durch ein Kegelradgetriebe gebildet, wie dies ebenfalls beim Ausführungsbeispiel der Fig. 1 bis 4 der Fall ist. Die Kegelradgetriebeausführung benötigt, wie ersichtlich, vergleichsweise wenig radialen Bauraum.

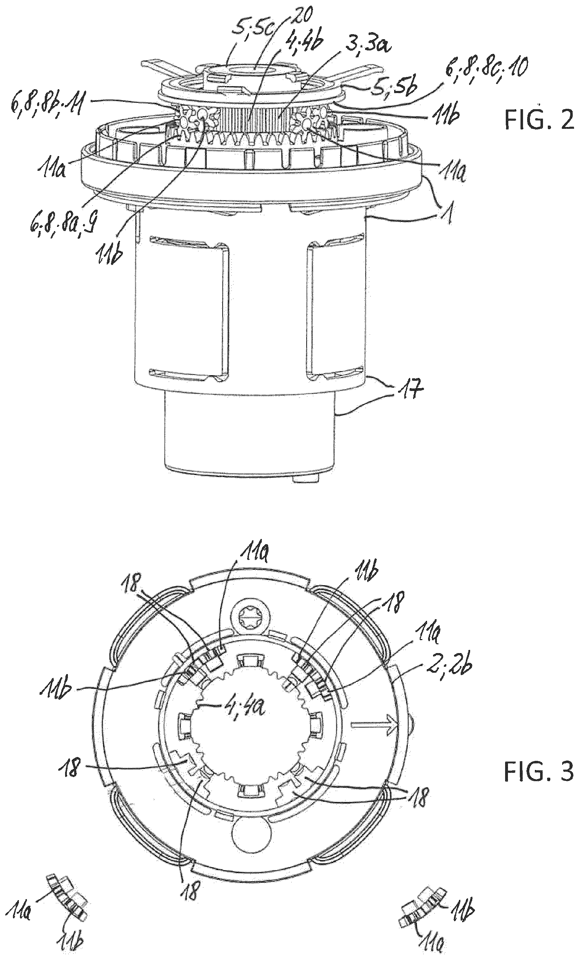

Spezieller beinhaltet das Ausführungsbeispiel der Fig. 1 bis 4 vier Paare von jeweils dem ersten Zahnrad 11a und dem zweiten Zahnrad 11b in einer Ausführung als Kegelzahnräder. Die Zahnräder 11a, 11b sind drehbeweglich in zugehörigen Zahnradaufnahmen 18 aufgenommen, die an der Drehringeinheit 2 ausgebildet sind, wie aus Fig. 3 ersichtlich, bei der zur besseren Erkennbarkeit zwei der vier Zahnradpaare 11a, 11b in ihre Zahnradaufnahmen 18 eingesetzt und die beiden anderen Zahnradpaare 11a, 11b herausgenommen gezeigt sind. Die Zahnräder 11a, 11b drehen sich mit ihren Drehachsen mit der Drehringeinheit 2 mit, und durch ihr kämmendes Zusammenwirken miteinander sowie mit jeweils einer der beiden axial versetzten Zahnkranzstrukturen am Basiskörper 1 einerseits und an der Abdeckblendeneinheit 5 andererseits wird die Abdeckblendeneinheit 5 beim Verdrehen der Drehringeinheit 2 in ihrer konstanten Drehstellung in Bezug auf den Basiskörper 1 gehalten. Dazu bildet das Kegelradgetriebe ein Zahnradgetriebe mit 1:1-Übersetzung, wobei sich die Drehringeinheit 2 und die Abdeckblendeneinheit 5 relativ zueinander gegensinnig drehen.

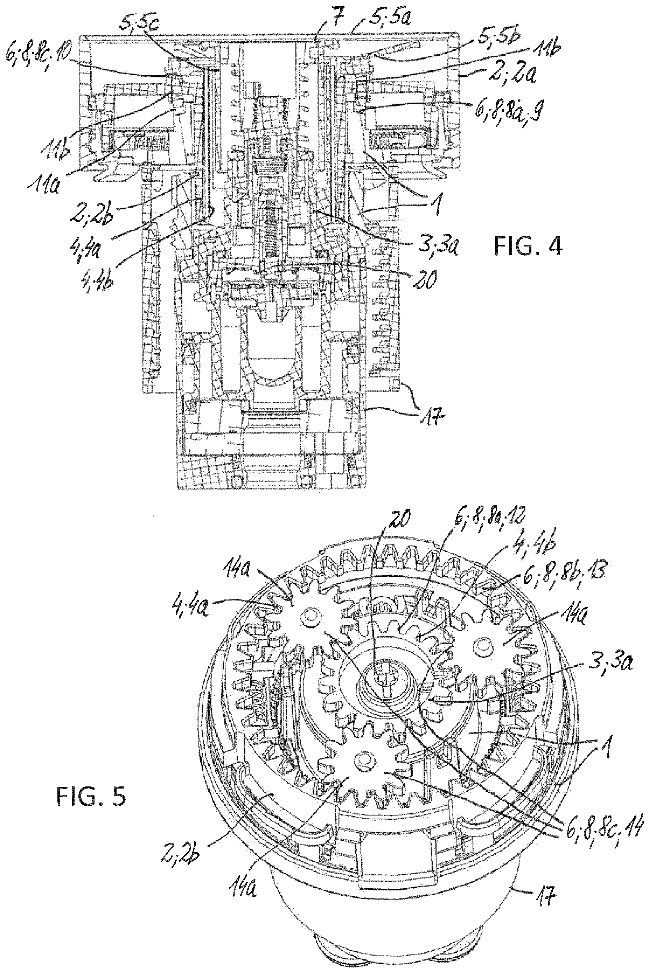

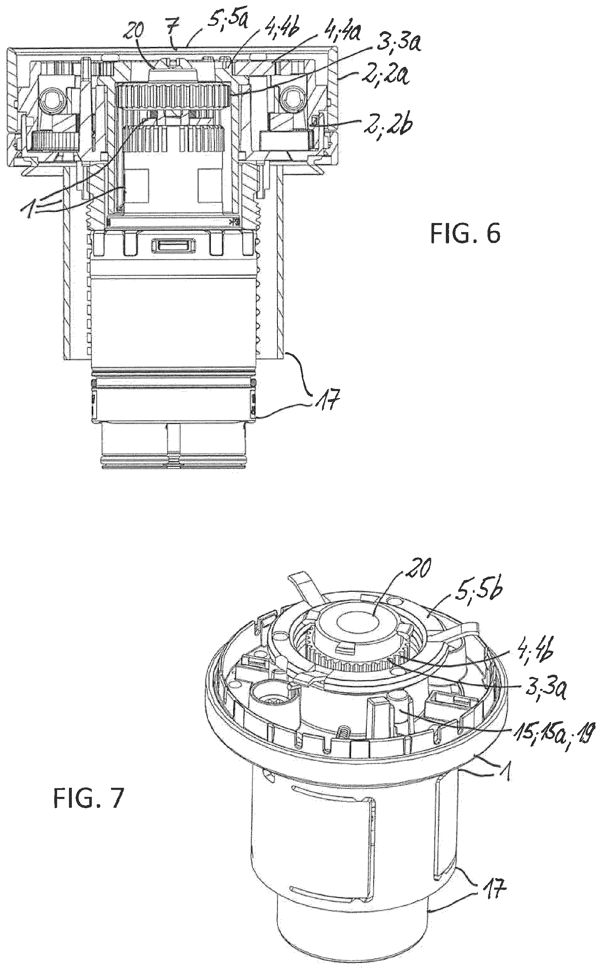

In einer zum Ausführungsbeispiel der Fig. 1 bis 4 alternativen Zahnradgetriebeausführung der Drehringbetätigungsvorrichtung beinhalten die erste Getriebezahnstruktur 8a eine dritte Zahnkranzstruktur 12, die zweite Getriebezahnstruktur 8b eine vierte Zahnkranzstruktur 13 und die dritte Getriebezahnstruktur 8c eine zweite Zahnradanordnung 14, die mit der dritten und der vierten Zahnkranzstruktur 12, 13 kämmt. Die Fig. 5 und 6 zeigen ein diesbezügliches Ausführungsbeispiel.

In einer weitergehenden Realisierung sind die dritte und die vierte Zahnkranzstruktur 12, 13 radial zueinander versetzt angeordnet, und die zweite Zahnradanordnung 14 umfasst mindestens ein drittes Zahnrad 14a, das mit der dritten und mit der vierten Zahnkranzstruktur 12, 13 kämmt. Diese Eigenschaften sind beim Ausführungsbeispiel der Fig. 5 und 6 ebenfalls verwirklicht.

Spezieller ist in dieser Ausführung der Drehringbetätigungsvorrichtung die Zahnradgetriebekopplung 8 vorzugsweise durch ein Planetengetriebe gebildet, wie dies beim Ausführungsbeispiel der Fig. 5 und 6 der Fall ist. Das oder die dementsprechend als Planetenräder fungierenden dritten Zahnräder 14a, im Beispiel der Fig. 5 und 6 drei Planetenräder 14a, sind mit ihren Drehachsen am Basiskörper 1 gelagert. Die Abdeckblendeneinheit 5 kann von den Drehachsen abgestützt und gehalten sein und bleibt bei dieser Planetengetriebeausführung gegenüber dem Basiskörper 1 feststehend.

Das mindestens eine Planetenrad 14a überträgt die Drehbewegung der an der Drehringeinheit 2 ausgebildeten vierten Zahnkranzstruktur 13 in eine gegensinnige Drehbewegung der am Basiskörper 1 angeordneten dritten Zahnkranzstruktur 12. Dabei kann in dieser Ausführung der Drehringbetätigungsvorrichtung die dritte Zahnkranzstruktur 12 Bestandteil der betätigungsseitigen Drehfunktionseinheit 3 sein bzw. deren gegenüber dem übrigen Basiskörper 1 drehbeweglich angeordnetes Drehfunktionsglied 3a bilden. In diesem Fall wird die vom Benutzer auf die Drehringeinheit 2 ausgeübte Drehbewegung in eine gegensinnige Drehbewegung des betätigungsseitigen Drehfunktionsglieds 3a übersetzt, beispielsweise bei Verwendung in einem Sanitärventil zum entgegengesetzten Verdrehen eines Ventilkörpers bzw. einer Ventilscheibe. Die Planetengetriebeausführung benötigt, wie ersichtlich, vergleichsweise wenig axialen Bauraum.

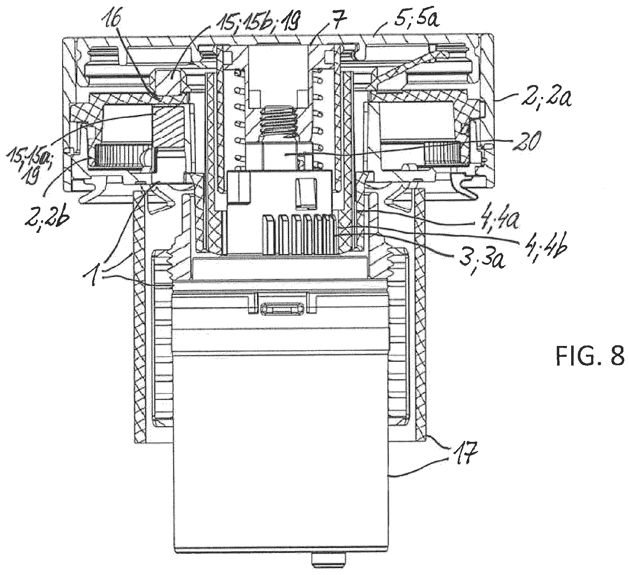

In weiteren alternativen Ausführungsformen der Drehringbetätigungsvorrichtung beinhaltet die Drehstellungshaltekopplung 6 keine Zahnradgetriebekopplung oder anderweitige mechanische Kopplung, sondern eine Magnetkopplung 15, wie dies beim Ausführungsbeispiel der Fig. 7 und 8 verwirklicht ist. Die Magnetkopplung 15 umfasst eine erste Magnetanordnung 15a am Basiskörper und eine mit dieser drehstellungsstabilisierend zusammenwirkende zweite Magnetanordnung 15b an der Abdeckblendeneinheit 5. Die beiden Magnetanordnungen 15a, 15b sind unter Bildung eines zwischenliegenden Durchführungsspalts 16 für die Drehringeinheit 2 axial voneinander beabstandet.

Der Durchführungsspalt 16 lässt sich insbesondere dafür nutzen, durch diesen hindurch eine Komponente der Drehringeinheit 2 durchzuführen, die sich dementsprechend im Durchführungsspalt 16 mit radialer Richtungskomponente radial von außen nach innen bzw. radial von innen nach außen erstreckt. Diese Durchführung kann beispielsweise dafür genutzt werden, eine mechanische Verbindung vom Griffringteil 2a radial nach innen zu einer weiteren Komponente der Drehringeinheit 2 oder zu einer Komponente der betätigungsseitigen Drehfunktionseinheit 3 oder zu einer Komponente der mechanischen Drehkopplung 4 zwischen der Drehringeinheit 2 und der Drehfunktionseinheit 3 bereitzustellen.

Im gezeigten Beispiel der Fig. 7 und 8 beinhaltet die erste Magnetanordnung 15a und die zweite Magnetanordnung 15b jeweils mehrere, z.B. zwei oder drei, Magnetelemente, wie Permanentmagnete 19, die am Basiskörper 1 bzw. an der Abdeckblendeneinheit 5 gehalten sind und durch ihre magnetisch anziehende Wechselwirkung dafür sorgen, dass die Abdeckblendeneinheit 5 ihre Drehstellung in Bezug auf den Basiskörper 1 beibehält, wenn die Drehringeinheit 2 vom Benutzer verdreht wird. Vorzugsweise befindet sich die Magnethalterung an der Abdeckblendeneinheit 5 in Ausführungen der Drehringbetätigungsvorrichtung mit der Drucktastenfunktionalität an einem bei der Drucktastenbetätigung axial feststehend bleibenden Teil der Abdeckblendeneinheit 5, oder die Magnethalterung befindet sich insgesamt an Komponenten der Abdeckblendeneinheit 5 und des Basiskörpers 1, die bei der Drucktastenbetätigung gemeinsam axial bewegt werden, ggf. zusammen mit der Drehringeinheit 2 oder Teilen derselben.

Fig. 1 zeigt speziell ein erfindungsgemäßes Sanitärventil in Kartuschenbauweise, das mit der Drehringbetätigungsvorrichtung gemäß den Fig. 1 bis 4 ausgerüstet ist und daher die sich durch Verwendung dieser Vorrichtung ergebenden, oben erläuterten Eigenschaften und Vorteile besitzt. Bei dem Sanitärventil kann es sich beispielsweise um ein Misch- oder Absperrventil zum Mischen zweier Fluide handeln, wie Kaltwasser und Warmwasser. Wie gezeigt, beinhaltet dieses Sanitärventil einen Ventilkartuschenkörper 17. Dieser stellt in dieser Ausführung des Sanitärventils den Basiskörper 1 der Drehringbetätigungsvorrichtung zur Verfügung. Genauer gesagt fungiert ein in Fig. 1 oberer Kartuschengehäuseteil als Basiskörper 1 der an der Oberseite des Ventilkartuschenkörpers 17 angeordneten Drehringbetätigungsvorrichtung. Durch die Drehbewegung der Drehringeinheit 2 kann bei diesem Sanitärventil z.B. eine Fluidmischfunktion bereitgestellt werden, wie zum Mischen von Kaltwasser und Warmwasser, wozu die Drehringeinheit 2 beispielsweise auf eine drehbewegliche Ventilscheibe im Kartuschenkörper 17 wirken kann. Die zusätzliche Axialbewegung der Drucktasteneinheit 7 der Drehringbetätigungsvorrichtung lässt sich bei diesem Sanitärventil beispielsweise zum Bereitstellen einer Fluidabsperrfunktion nutzen, d.h. es kann sich bei dem Sanitärventil um ein kombiniertes Misch- und Absperrventil handeln.

Wie die gezeigten und die weiteren oben erläuterten Ausführungsbeispiele deutlich machen, stellt die Erfindung in vorteilhafter Weise eine Drehringbetätigungsvorrichtung zur Verfügung, die insbesondere Vorteile im Hinblick auf zuverlässige und bedienerkomfortable Funktionalität, geringen Bauraumbedarf und geringen Herstellungsaufwand bietet. Des Weiteren stellt die Erfindung ein Sanitärventil zur Verfügung, das mit einer erfindungsgemäßen Drehringbetätigungsvorrichtung ausgerüstet ist und damit insoweit ebenfalls deren Vorteile aufweist.

Es versteht sich, dass die erfindungsgemäße Drehringbetätigungsvorrichtung nicht nur, wie erwähnt, für Sanitärventile vorteilhaft genutzt werden kann, sondern auch für beliebige andere Anwendungen, bei denen eine Vorrichtung benötigt wird, mit der eine Nutzfunktion einer entsprechenden Einrichtung vom Benutzer mittels einer Drehbewegung bei gleichzeitig stehen bleibendem Abdeckkappenteil gesteuert werden soll.

## Patentansprüche

1. Drehringbetätigungsvorrichtung, insbesondere für ein Sanitärventil, mit
- einem Basiskörper (1),
- einer bedienseitigen Drehringeinheit (2), die gegenüber dem Basiskörper (1) drehbeweglich angeordnet ist und einen nutzerbedienbaren Griffringteil (2a) und einen hülsen- oder ringförmigen Drehkoppelteil (2b) aufweist,
- einer betätigungsseitigen Drehfunktionseinheit (3) mit einem gegenüber dem Basiskörper (1) drehbeweglich angeordneten Drehfunktionsglied (3a) und
- einer mechanischen Drehkopplung (4) zwischen der Drehringeinheit (2) und der Drehfunktionseinheit (3) mit einer bedienseitigen Drehkoppelstruktur (4a) am Drehkoppelteil (2b) und einer mit der bedienseitigen Drehkoppelstruktur (4a) zusammenwirkenden, betätigungsseitigen Drehkoppelstruktur (4b) am Drehfunktionsglied (3a),
**gekennzeichnet durch**
- eine Abdeckblendeneinheit (5), die einen gegenüber dem Griffringteil (2a) eigenständigen und von diesem umgebenen Abdeckkappenteil (5a) aufweist und gegenüber dem Basiskörper (1) drehstellungsfest angeordnet ist, und
- eine Drehstellungshaltekopplung (6), die dafür eingerichtet ist, bei Verdrehung der Drehringeinheit (2) gegenüber dem Basiskörper (1) die Abdeckblendeneinheit (5) in ihrer Drehstellung gegenüber dem Basiskörper (1) konstant zu halten.

2. Drehringbetätigungsvorrichtung nach Anspruch 1, weiter **gekennzeichnet durch** eine bedienseitige Drucktasteneinheit (7), die gegenüber dem Basiskörper (1) axialbeweglich angeordnet ist und die Abdeckblendeneinheit (5) beinhaltet, und eine betätigungsseitige Translationsfunktionseinheit (20), die mit der Abdeckblendeneinheit (5) translationsgekoppelt ist.

3. Drehringbetätigungsvorrichtung nach Anspruch 1 oder 2, weiter **dadurch gekennzeichnet, dass** die Drehstellungshaltekopplung (6) eine Zahnradgetriebekopplung (8) beinhaltet, die eine erste Getriebezahnstruktur (8a) am Basiskörper (1), eine zweite Getriebezahnstruktur (8b) an der Drehringeinheit (2) und eine dritte Getriebezahnstruktur (8c) an der Abdeckblendeneinheit (5) umfasst.

4. Drehringbetätigungsvorrichtung nach Anspruch 3, weiter **dadurch gekennzeichnet, dass** die erste Getriebezahnstruktur (8a) eine erste Zahnkranzstruktur (9) beinhaltet, die dritte Getriebezahnstruktur (8c) eine zweite Zahnkranzstruktur (10) beinhaltet und die zweite Getriebezahnstruktur (8b) eine erste Zahnradanordnung (11) beinhaltet, die mit der ersten und der zweiten Zahnkranzstruktur (9, 10) kämmt.

5. Drehringbetätigungsvorrichtung nach Anspruch 4, weiter **dadurch gekennzeichnet, dass** die erste und die zweite Zahnkranzstruktur (9, 10) axial zueinander versetzt angeordnet sind und die erste Zahnradanordnung (11) mindestens ein erstes, mit der ersten Zahnkranzstruktur (9) kämmendes Zahnrad (11a) und mindestens ein zweites Zahnrad (11b) umfasst, das mit der zweiten Zahnkranzstruktur (10) und mit dem mindestens einen ersten Zahnrad (11a) kämmt.

6. Drehringbetätigungsvorrichtung nach Anspruch 4 oder 5, weiter **dadurch gekennzeichnet, dass** die Zahnradgetriebekopplung (8) durch ein Kegelradgetriebe gebildet ist.

7. Drehringbetätigungsvorrichtung nach Anspruch 3, weiter **dadurch gekennzeichnet, dass** die erste Getriebezahnstruktur (8a) eine dritte Zahnkranzstruktur (12) beinhaltet, die zweite Getriebezahnstruktur (8b) eine vierte Zahnkranzstruktur (13) beinhaltet und die dritte Getriebezahnstruktur (8c) eine zweite Zahnradanordnung (14) beinhaltet, die mit der dritten und der vierten Zahnkranzstruktur (12, 13) kämmt.

8. Drehringbetätigungsvorrichtung nach Anspruch 7, weiter **dadurch gekennzeichnet, dass** die dritte und die vierte Zahnkranzstruktur (12, 13) radial zueinander versetzt angeordnet sind und die zweite Zahnradanordnung (14) mindestens ein drittes Zahnrad (14a) umfasst, das mit der dritten und mit der vierten Zahnkranzstruktur (12, 13) kämmt.

9. Drehringbetätigungsvorrichtung nach Anspruch 7 oder 8, weiter **dadurch gekennzeichnet, dass** die Zahnradgetriebekopplung (8) durch ein Planetengetriebe gebildet ist.

10. Drehringbetätigungsvorrichtung nach Anspruch 1 oder 2, weiter **dadurch gekennzeichnet, dass** die Drehstellungshaltekopplung (6) eine Magnetkopplung (15) beinhaltet, die eine erste Magnetanordnung (15a) am Basiskörper (1) und eine mit dieser drehstellungsstabilisierend zusammenwirkende zweite Magnetanordnung (15b) an der Abdeckblendeneinheit (5) umfasst, wobei die erste und die zweite Magnetanordnung (15a, 15b) unter Bildung eines zwischenliegenden Durchführungsspaltes (16) für die Drehringeinheit (2) axial voneinander beabstandet sind.

11. Sanitärventil mit einer Drehringbetätigungsvorrichtung nach einem der Ansprüche 1 bis 10.

12. Sanitärventil nach Anspruch 11, wobei es einen Ventilkartuschenkörper (17) aufweist, der den Basiskörper (1) der Drehringbetätigungsvorrichtung bereitstellt.

13. Sanitärventil nach Anspruch 11 oder 12, wobei es dafür eingerichtet ist, durch die Drehbewegung der Drehringeinheit (2) eine Fluidmischfunktion oder eine Mengenregulierfunktion oder eine Verbraucherauswahlfunktion bereitzustellen.

14. Sanitärventil nach einem der Ansprüche 11 bis 13, wobei es dafür eingerichtet ist, durch die Axialbewegung der Drucktasteneinheit (7) eine Fluidabsperrfunktion bereitzustellen.
